# EUROPÄISCHE PATENTANMELDUNG

(11) **EP 1 236 663 A2**
(43) Veröffentlichungstag der Anmeldung: **04.09.2002**
(21) Anmeldenummer: 02004631.4
(22) Anmeldetag: 28.02.2002
(51) Int. Cl.: B65G 23/10, B65G 23/44

(54) **Vorrichtung zum Ein- und/oder Ausschleusen von Fördergut**

(30) Priorität: 03.03.2001 DE 20103764 U
(71) Anmelder: TRANSNORM SYSTEM GmbH, 31177 Harsum (DE)
(72) Erfinder: Warnecke, Karl, 31079 Sibbesse (DE)
(74) Vertreter: Siekmann, Gunnar, Dipl.-Phys.

(57) **Zusammenfassung**

Eine Vorrichtung (1) zum Ein- und/oder Ausschleusen von Fördergut unter einem Winkel in eine Förderstrecke mit einem Endlosband (4), das um einen Schleusabschnitt (2) und einen Umlenkabschnitt (3) geführt ist, wobei der Schleusabschnitt einen rechtwinkligen Endbereich (8) und einen spitzwinkligen Endbereich (9) aufweist, und mit einem Antrieb (10) mit einer Antriebstrommel (11) und einer Back-up-Rolle (13) wird so weiterentwickelt, daß der Antrieb benachbart zu dem rechtwinkligen Endbereich des Schleusabschnitts angeordnet ist und daß die Back-up-Rolle zu der Antriebstrommel verschiebbar ist.

## Beschreibung

Die Erfindung betrifft eine Vorrichtung zum Ein- und/oder Ausschleusen von Fördergut unter einem Winkel in eine Förderstrecke mit einem Endlosband, das um einen Schleusabschnitt und einen Umlenkabschnitt geführt ist, wobei der Schleusabschnitt einen rechtwinkeligen und einen spitzwinkeligen Endbereich aufweist, und mit einem Antrieb mit einer Antriebsrolle und mit einer Back-up-Rolle.

Eine solche Vorrichtung, nämlich ein Bandförderer mit Einund Ausschleuseinrichtung ist beispielsweise aus der EP 0 678 464 B1 bekannt. Mit einer solchen Vorrichtung wird Fördergut einer Förderstrecke zugeführt. Ein Endbereich des Bandförderers ist dazu spitzwinkelig ausgeführt, d.h., daß die Abschlußkante zu der Laufrichtung des Bandes vom rechten Winkel abweicht, und beispielsweise zu der Laufrichtung einen Winkel von 45° oder 30° einnimmt, so daß der Bandförderer oder die Vorrichtung zum Zuführen von Fördergut unter einem von 90° abweichenden Winkel an die Hauptförderstrecke angelegt werden kann. Der Teil der Vorrichtung, über den das Fördergut transportiert wird, wird als Schleusabschnitt bezeichnet, und ein zweiter Teil der Vorrichtung, an dem das Endlosband umgelenkt wird, wird als Umlenkabschnitt bezeichnet. In der EP 0 678 464 B1 ist in diesem Umlenkabschnitt neben einer Antriebstrommel eine als Back-up-Rolle bezeichnete Umlenkrolle vorgesehen, die der Führung des Untertrums ohne Gurtspannung derart dient, daß der Gurt die Antriebstrommel um weit mehr als 180° umschlingt und bei Beginn der Drehung der Antriebstrommel eine sehr große Traktion entwickeln kann, ohne daß eine Gurtspannung aufgebracht werden muß, die zu einer unerwünschten Erhöhung der Reibung führen würde.

Der Erfindung liegt die Aufgabe zugrunde, eine Vorrichtung der eingangs genannten Art zu schaffen, die besonders kompakt ausgebildet ist und insbesondere auch einen wartungsarmen Betrieb ermöglicht.

Die Lösung dieser Aufgabe erfolgt mit einer Vorrichtung mit den Merkmalen des Schutzanspruchs 1. Vorteilhafte Weiterbildungen der Erfindung sind in den Unteransprüchen angegeben.

Erfindungsgemäß zeichnet sich die Vorrichtung dadurch aus, daß der Antrieb benachbart zu dem rechtwinkeligen Endbereich des Schleusabschnittes angeordnet ist und daß die Back-up-Rolle zu der Antriebstrommel verschiebbar ist. Dadurch ist eine besonders kompakte Bauweise möglich, da der Umlenkabschnitt besonders kurz ausgebildet werden kann, da in diesem Bereich kein Antrieb mehr vorgesehen sein muß, so daß im Ergebnis mehrere Vorrichtungen zum Ein- und/oder Ausschleusen an einen vergleichsweisen kurzen Abschnitt einer Förderstrecke angeordnet werden können. Der Antrieb ist dabei in dem rechtwinkeligen Endbereich des Schleusabschnittes angeordnet und damit auch die Antriebsrolle und eine zugehörige Back-up-Rolle. Die Back-up-Rolle ist dabei gegen die Antriebstrommel verschiebbar ausgebildet, so daß dadurch die Bandspannung vor Ort anpaßbar und einstellbar ist. Da die Länge des Endlosbandes der Vorrichtung von Vorrichtung zu Vorrichtung etwas variieren kann, ist die Verschiebbarkeit der Back-up-Rolle und damit eine solche Regulationsmöglichkeit besonders günstig.

Die Back-up-Rolle ist bevorzugt in Umfangsrichtung zu der Antriebstrommel verschiebbar, wobei in einer besonders bevorzugten Ausführungsform die Back-up-Rolle um die Achse der Antriebstrommel schwenkbar gelagert ist. Auf diese Weise ist die Back-up-Rolle in einem definierten Abstand zu der Antriebstrommel, und bei einer Verschiebung der Back-up-Rolle wird auf besonders effektive Weise die Länge des Endlosbandes verkürzt oder verlängert. In einer besonders bevorzugten Weiterbildung der Erfindung ist die Back-up-Rolle mit einer bestimmten Kraft zur Erzeugung einer definierten Bandspannung beaufschlagt. Dadurch wird erreicht, daß eine automatische Justage erfolgt und die Einstellung der Bandspannung nicht kontrolliert werden muß, da diese automatisch eingestellt wird. Bevorzugt wird die Back-up-Rolle dazu mit einer Feder beaufschlagt, die diese Kraft zur Erzeugung einer definierten Bandspannung aufbringt. Die Feder zieht also die Back-up-Rolle in Umfangsrichtung um die Antriebstrommel entgegen der durch das Endlosband auf die Back-up-Rolle wirkenden Kraft. Bei einer bestimmten Bandspannung stellt sich dabei dann ein Gleichgewicht zwischen der von dem Endlosband auf die Back-up-Rolle wirkenden Kraft und der durch die Feder erzeugten Kraft ein. Alternativ zu der Verwendung einer Feder zur Erzeugung der auf die Back-up-Rolle wirkenden Kraft kann auch eine Vorrichtung verwendet werden, die die Gewichtskraft ausnutzt und auf diese Weise die Back-up-Rolle gegen das Endlosband spannt. Ebenso kann auch eine pneumatisch betriebene Vorrichtung verwendet werden, um die Back-up-Rolle mit einer vorbestimmten Kraft gegen das Endlosband zu spannen. Auf diese Weise kann eine definierte Bandspannung eingestellt werden.

In einer bevorzugten Ausbildungsform der Erfindung greift der Antrieb an einem Untertrum an. Weiterhin ist zusätzlich zu dem Antrieb eine Umlenkeinrichtung am Ende des rechtwinkeligen Endbereiches angeordnet, so daß also eine Umlenkrolle vorgesehen ist, das Endlosband dann von der Umlenkrolle über eine benachbarte Antriebstrommel und die Back-up-Rolle geführt ist.

Um sicherzustellen, daß die Back-up-Rolle gleichmäßig auf das Endlosband wirkt, ist die Back-up-Rolle bevorzugt von einer durchgehenden Traverse gehalten, die auf beiden Seiten geführt und mit einer Feder beaufschlagt ist.

Bei einem schiebenden Antrieb des Endlosbandes, bei dem die Vorrichtung als Einschleuser arbeitet, wird die Back-up-Rolle bevorzugt in Richtung des spitzwinkeligen Endbereichs gezogen. Bei einem Betrieb der Vorrichtung als Ausschleuser, bei dem das Endlosband mit einem ziehenden Antrieb betrieben wird, wird die Back-up-Rolle bevorzugt in Richtung des rechtwinkeligen Endbereichs gezogen.

Durch die Ausbildung des Antriebs in dem Schleusabschnitt ist der Umlenkabschnitt bevorzugt so klein ausgebildet, daß eine in dem Umlenkabschnitt angeordnete Umlenkrolle unmittelbar benachbart zu dem in dem Schleusabschnitt geführten Endlosband angeordnet ist. In einer anderen bevorzugten Ausführungsform ist auch der spitzwinkelige Endbereich der Vorrichtung frei zugänglich und bevorzugt nach innen klappbar ausgebildet, so daß ein Wechsel des Endlosbandes besonders einfach möglich ist.

Nachfolgend wird die Erfindung anhand eines in der Zeichnung dargestellten bevorzugten Ausführungsbeispiels weiter erläutert.

### Im einzelnen zeigen die schematischen Darstellungen in:

- Fig. 1:: eine perspektivische Ansicht einer erfindungsgemäßen Vorrichtung, die als Einschleuser ausgebildet ist;
- Fig. 2:: eine zweite perspektivische Ansicht der Vorrichtung gemäß Fig. 1;
- Fig. 3:: eine Querschnittsansicht der Vorrichtung gemäß Fig. 1;
- Fig. 4:: eine perspektivische Ansicht einer erfindungsgemäßen Vorrichtung, die als Ausschleuser ausgebildet ist;
- Fig. 5:: eine zweite perspektivische Ansicht einer Vorrichtung gemäß Fig. 4; und
- Fig. 6:: eine Querschnittsansicht einer Vorrichtung gemäß Fig. 4.

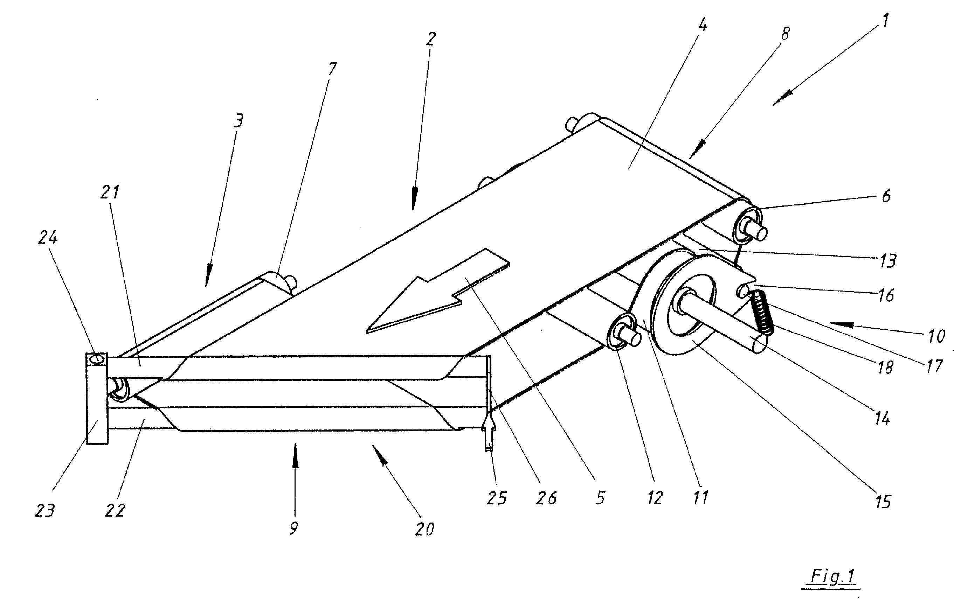

In Fig. 1 ist eine perspektivische Ansicht einer erfindungsgemäßen Vorrichtung 1 dargestellt, die als Einschleuser ausgebildet ist. Die Vorrichtung 1 weist einen Schleusabschnitt 2 und einen Umlenkabschnitt 3 auf, wobei über den Einschleusabschnitt 2 von dessen rechtwinkeligem Endbereich 8 in Richtung des Pfeils 5 zu dem spitzwinkeligen Endbereich 9 Fördergut in eine an dem spitzwinkeligen Endbereich 9 vorbeilaufende Förderstrecke eingeschleust werden kann. Hierzu weist die Vorrichtung 1 ein Endlosband 4 auf, das auf der Oberseite als Obertrum und auf der Unterseite als Untertrum bezeichnet wird. Das Endlosband 4 wird von einem Antrieb 10 angetrieben. Bei der hier dargestellten Ausführungsform als Einschleuser arbeitet der Antrieb 10 "schiebend" oder als schiebender Antrieb, wobei das Endlosband 4 von dem Antrieb über eine Umlenkrolle 6 im rechtwinkeligen Endbereich 8 des Einschleusabschnittes 2 geführt und dann über eine Umlenkeinrichtung 20, die den spitzwinkeligen Endbereich 9 des Einschleusabschnittes 2 bildet, zu einer Umlenkrolle 7 des Umlenkabschnittes 3 geführt ist. Von dieser läuft das Band zurück zu einem unteren Teil der Umlenkeinrichtung 20 und von dort wieder zu dem Antrieb 10.

Der Antrieb 10 wird im wesentlichen von einer Antriebstrommel 11, einer Umlenkrolle 12 und einer Back-up-Rolle 13 gebildet. Die Umlenkrolle 12 und die Back-up-Rolle 13 stellen sicher, daß das Endlosband 4 in einem großen Umschlingungswinkel an der Antriebstrommel 11 anliegt und dadurch eine sehr große Traktion entwickelt werden kann. Die Antriebstrommel 11 ist an der angetriebenen Achse 14 feststehend in der Vorrichtung 1 angeordnet. Ebenso ist die Umlenkrolle 12 feststehend angeordnet. Demgegenüber ist die Back-up-Rolle 13 verschiebbar in Umfangsrichtung zu der Antriebstrommel 11 gelagert und zwar in einer um die Achse 14 der Antriebstrommel 11 drehbar gelagerten Aufhängung 15, die scheibenförmig und mit einer Ausnehmung 16 ausgebildet ist, in die die Achse 17 der Antriebstrommel 11 eingelegt ist. Bei der hier dargestellten schiebenden Ausführungsform ist die Back-up-Rolle 13 zwischen der Antriebstrommel 11 und dem rechtwinkeligen Endabschnitt 8 angeordnet und wird zudem von einer Feder 18 nach unten gezogen, so daß eine bestimmte Spannung auf das Endlosband, das unterhalb der Back-up-Rolle 13 entlangläuft, gegeben wird. Durch die Wahl der Feder 18 mit einer bestimmten Federkraft kann die Spannung des Endlosbandes 4 vorgegeben werden, ohne daß aufwendige Einstellungen und Justierungen durch Fachpersonal nötig wären. Die Feder 18 ist hier als Zugfeder dargestellt.

Alternativ ist diese jedoch so ausgebildet, daß an dem scheibenförmigen Element 15 eine Stange angreift, die von einer Druckfeder beaufschlagt ist, die sich an einen an der Vorrichtung feststehenden Punkt abstützt und dadurch einen Zug auf die Stange ausübt. Die Druckfeder ist also um die Stange gelegt und stützt sich an einem Auge ab, durch welches die Stange hindurchgeführt ist und das an der Vorrichtung feststehend angeordnet ist. Mit dem anderen Ende stützt sich die Druckfeder an einem erweiterten Endbereich der Stange ab, so daß die Druckfeder die Stange insgesamt nach außen drückt und damit im Ergebnis einen Zug auf das Endlosband ausübt.

Die in dem spitzwinkeligen Endbereich 9 des Schleusabschnittes vorgesehene Umlenkeinrichtung 20 weist ein oberes Umlenkelement 21, um das der Obertrum geführt ist, und ein unteres Umlenkelement 22 auf, um das der Untertrum geführt ist. Die Umlenkelemente 21 und 22 sind an einem Halter 23 befestigt, der um eine Schwenkachse 24 schwenkbar ist, so daß die Umlenkelemente 21 und 22 in Richtung des Pfeiles 25 schwenkbar sind. Dazu sind die Umlenkelemente 21 und 22 im rechten Randbereich, insbesondere an dem dort vorgesehenen Rahmen 26, lösbar befestigt.

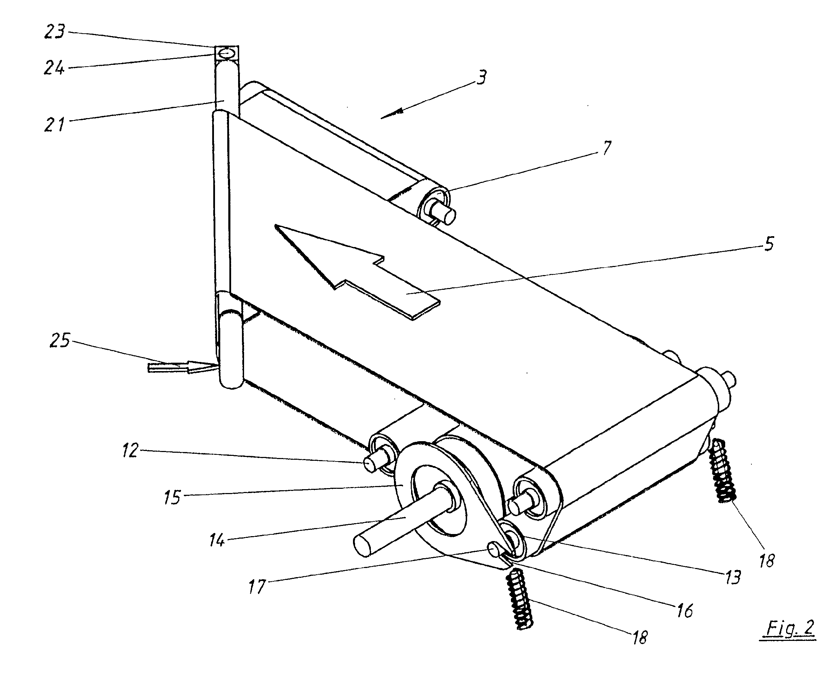

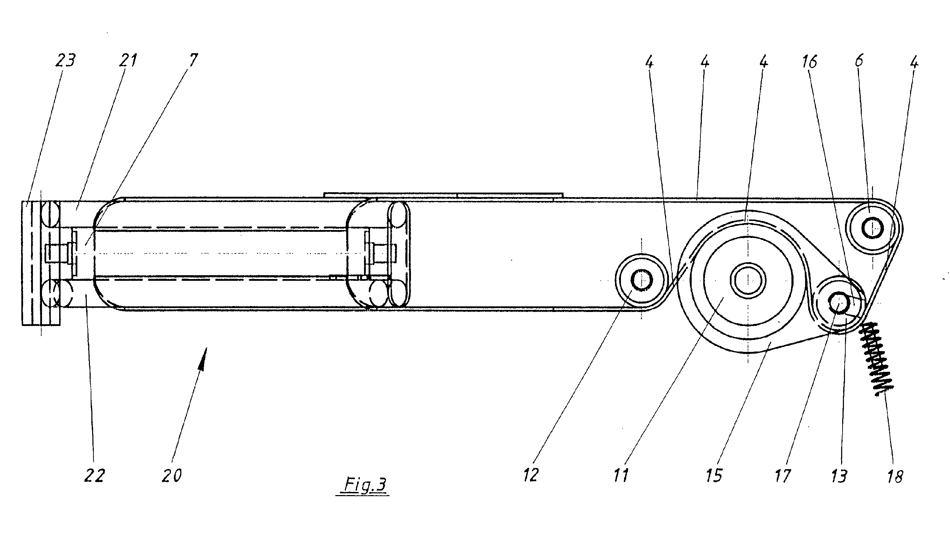

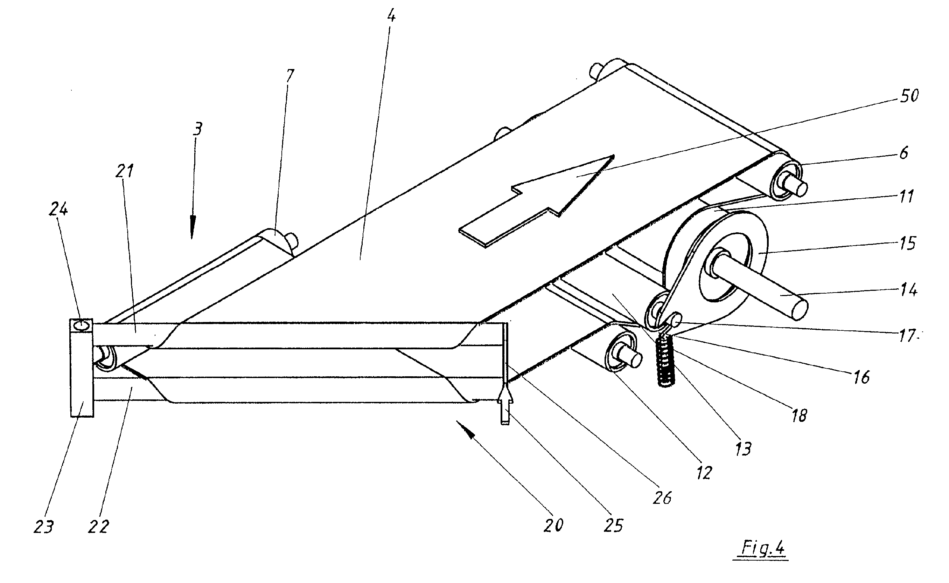

In Fig. 2 ist eine zweite perspektivische Ansicht der Vorrichtung gemäß Fig. 1 dargestellt. In dieser ist die Back-up-Rolle 13 noch deutlicher zu erkennen. Die Back-up-Rolle 13 ist ebenfalls auf einer durchgängigen Achse mit Federn 18 auf beiden Seiten der Achse 17 angeordnet, so daß eine gleichmäßige Zugwirkung gewährleistet ist.

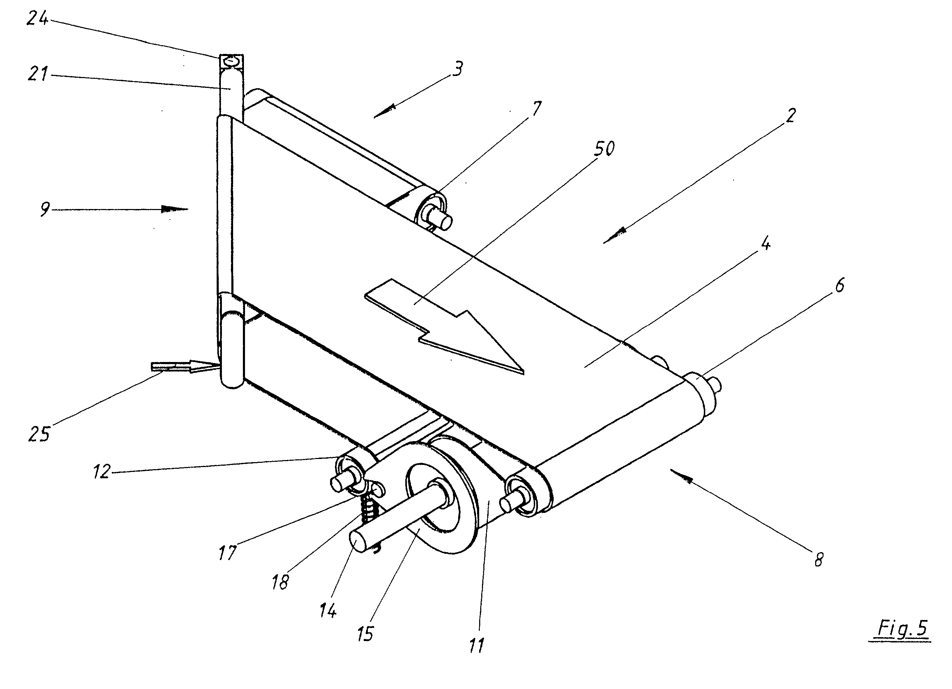

In Fig. 3 ist eine Querschnittsansicht durch die Vorrichtung gemäß der Fig. 1 und 2 dargestellt. Hier ist noch einmal deutlich zu erkennen, daß das Endlosband 4 um die Back-up-Rolle 13, die Antriebstrommel 11 und die Umlenkrolle 12 geführt ist, so daß die Antriebstrommel in einem möglichst großen Bereich des Umfangs umschlungen wird. Im Bereich der Umlenkeinrichtung 20 ist das obere Umlenkelement 21 dargestellt, um das der Obertrum läuft, dann zu der Umlenkrolle 7 des Umlenkabschnittes 3 geführt ist und von dort zurück über das untere Umlenkelement 22 geführt ist und als Untertrum weiterläuft. Die Umlenkelemente 21 und 22 sind an der Halterung 23 angeordnet. Der in Fig. 1 dargestellte vordere Rahmen 26 ist in dieser Querschnittsansicht nicht erkennbar.

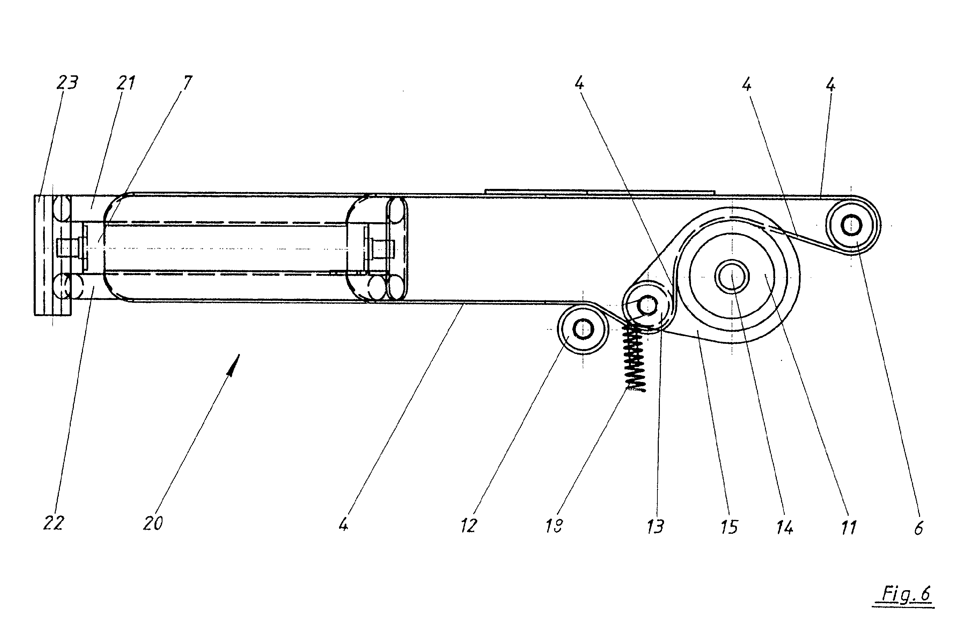

In Fig. 4 ist eine zweite Ausführungsform der erfindungsgemäßen Vorrichtung dargestellt, die als Ausschleuser arbeitet, wie durch den Pfeil 50 dargestellt ist, der anzeigt, daß das Endlosband 4 von dem spitzwinkeligen Endbereich 9 des Schleusabschnittes 2 zu dem rechtwinkeligen Endbereich 8 des Schleusabschnittes 2 läuft. Bei einer solchen Anordnung spricht man von einem ziehenden Antrieb. Der Antrieb 10 ist hier ebenfalls mit einer Umlenkrolle 12, der Antriebstrommel 11 und der Back-up-Rolle 13 ausgebildet, wobei jedoch die Reihenfolge der Anordnung der Rollen gegenüber der schiebenden Ausführungsform der Fig. 1 und 3 anders ist. Die Back-up-Rolle 13 ist hier auf der dem rechtwinkeligen Endbereich 8 des Schleusabschnittes 2 abgewandten Seite der Antriebstrommel 11 angeordnet und liegt daher zwischen der Antriebstrommel 11 und der dieser Antriebstrommel zugeordneten Umlenkrolle 12. Im übrigen sind gleiche Teile mit gleichen Bezugszahlen gekennzeichnet.

In Fig. 5 ist eine zweite perspektivische Ansicht dargestellt.

In Fig. 6 ist eine Querschnittsansicht dargestellt. Auch hier sind gleiche Teile mit gleichen Bezugszahlen gekennzeichnet.

## Patentansprüche

1. Vorrichtung zum Ein- und/oder Ausschleusen von Fördergut unter einem Winkel in eine Förderstrecke mit einem Endlosband (4), das um einen Schleusabschnitt (2) und einen Umlenkabschnitt (3) geführt ist, wobei der Schleusabschnitt (2) einen rechtwinkeligen Endbereich (8) und einen spitzwinkeligen Endbereich (9) aufweist, und mit einem Antrieb (10) mit einer Antriebstrommel (11) und einer Back-up-Rolle (13),
**dadurch gekennzeichnet,**
**daß** der Antrieb (10) benachbart zu dem rechtwinkeligen Endbereich (8) des Schleusabschnitts (2) angeordnet ist und
**daß** die Back-up-Rolle (13) zu der Antriebstrommel (11) verschiebbar ist.

2. Vorrichtung nach Anspruch 1, **dadurch gekennzeichnet, daß** die Back-up-Rolle (13) in Umfangsrichtung zu der Antriebstrommel (11) verschiebbar ist.

3. Vorrichtung nach einem der vorhergehenden Ansprüche, **dadurch gekennzeichnet, daß** die Back-up-Rolle (13) um die Achse der Antriebstrommel (11) schwenkbar gelagert ist.

4. Vorrichtung nach einem der vorhergehenden Ansprüche, **dadurch gekennzeichnet, daß** die Back-up-Rolle (13) mit einer bestimmten Kraft zur Erzeugung einer definierten Bandspannung beaufschlagt ist.

5. Vorrichtung nach einem der vorhergehenden Ansprüche, **dadurch gekennzeichnet, daß** die Back-up-Rolle (13) mit einer Feder (18) beaufschlagt ist.

6. Vorrichtung nach einem der Ansprüche 1 bis 4, **dadurch gekennzeichnet, daß** die Back-up-Rolle (13) mit einer pneumatisch betriebenen Vorrichtung beaufschlagt ist.

7. Vorrichtung nach einem der vorhergehenden Ansprüche, **dadurch gekennzeichnet, daß** der Antrieb (10) an einem Untertrum angreift.

8. Vorrichtung nach einem der vorhergehenden Ansprüche, **dadurch gekennzeichnet, daß** zusätzlich zu dem Antrieb (10) eine Umlenkeinrichtung (6) am Ende des rechtwinkeligen Endbereichs (8) angeordnet ist.

9. Vorrichtung nach einem der vorhergehenden Ansprüche, **dadurch gekennzeichnet, daß** die Back-up-Rolle (13) von einer durchgehenden Traverse gehalten ist, die auf beiden Seiten geführt und mit einer Feder (18) beaufschlagt ist.

10. Vorrichtung nach einem der vorhergehenden Ansprüche, **dadurch gekennzeichnet, daß** bei einem schiebenden Antrieb des Endlosbandes (4) die Back-up-Rolle (13) auf der dem rechtwinkeligen Endbereich (8) zugewandten Seite der Antriebstrommel (11) angeordnet ist.

11. Vorrichtung nach einem der Ansprüche 1 bis 10, **dadurch gekennzeichnet, daß** bei einem ziehenden Antrieb des Endlosbandes (4) die Back-up-Rolle (13) auf der dem rechtwinkeligen Endbereich (8) abgewandten Seite der Antriebstrommel (11) angeordnet ist.

12. Vorrichtung nach einem der vorhergehenden Ansprüche, **dadurch gekennzeichnet, daß** der Umlenkabschnitt kurz ausgebildet ist und die Umlenkrolle (7) benachbart zu dem Endlosband (4) des Schleusabschnittes (2) positioniert ist.

13. Vorrichtung nach einem der vorhergehenden Ansprüche, **dadurch gekennzeichnet, daß** eine Umlenkeinrichtung (20) am spitzwinkeligen Endbereich (9) des Schleusabschnittes (2) klappbar ausgebildet ist.
